# EUROPÄISCHE PATENTSCHRIFT

(11) **EP 3 034 278 B1**
(45) Veröffentlichungstag und Bekanntmachung des Hinweises auf die Patenterteilung: **12.02.2020**
(21) Anmeldenummer: 14004303.5
(22) Anmeldetag: 19.12.2014
(51) Int. Cl.: B29C 65/34, B29C 65/36

(54) **Bauteil mit stoffschlüssiger Verbindung und ein Fügeverfahren**
Component with firmly bonded connection and a joining method
Composant ayant une connexion par liaison de matière et procédé de jointure

(43) Veröffentlichungstag der Anmeldung: 22.06.2016
(73) Patentinhaber: Airbus Defence and Space GmbH, 85521 Ottobrunn (DE)
(72) Erfinder: Silvanus, Jürgen, 82008 Unterhaching (DE); Meyer, Dr. Meinhard, 81739 München (DE); Jürgens, Michael, 80797 München (DE)
(74) Vertreter: Isarpatent

(56) Entgegenhaltungen:
- WO-A2-2012/140058
- FR-A1- 2 742 691
- US-A- 3 449 199
- US-A- 4 911 683
- US-A- 5 466 506
- US-A1- 2003 075 919
- US-A1- 2013 287 481

## Beschreibung

Die Erfindung betrifft ein Bauteil mit zumindest zwei Kunststoffkomponenten, die miteinander verbunden sind und ein entsprechendes Fügeverfahren.

In unterschiedlichen industriellen Anwendungsgebieten ist es eine wiederkehrende Aufgabe unterschiedliche Kunststoffkomponenten miteinander zu verbinden. Dabei kommen bevorzugt Klebeverfahren und Schweißverfahren zum Einsatz. Bei faserverstärkten Kunststoffen ergibt sich häufig der Fall, dass in dem Verbindungsbereich, also dem Bereich, wo die Klebe- oder Schweißfläche ist, keine Faserverstärkung vorhanden ist. Die Festigkeit des faserverstärkten Kunststoffs ergibt sich aus der Kombination von dem Matrix-Kunststoff und den darin eingebetteten Fasern. Aufgrund der fehlenden Fasern in dem Verbindungsbereich hat ein verschweißtes Bauteil dort eine reduzierte Tragfähigkeit, insbesondere Zugfestigkeit. Um dieses Problem zu reduzieren, werden herkömmlich die Verklebungen großflächiger ausgelegt oder ergänzende Sicherungsmittel, wie z.B. "Angstnieten" verwendet. Nieten werden als Angstnieten bezeichnet, wenn sie bei einer ausreichend stabilen Klebung eigentlich nicht notwendig wären, bei der die Verbindungsfestigkeit einer Verklebung der Festigkeit des Grundmaterials entspricht. Auch kommen "Angstnieten" zum Einsatz, um ein spontanes, d.h. schlecht/nicht vorhersagbares Versagen von Klebungen im Allgemeinen zu vermeiden. Dies kann auch von ungleichmäßigen mechanischen Eigenschaften in Dickenrichtung von Faserverbundlaminaten bzw. Fügungen von Faserverbundlaminaten begründet sein. Ein Faserverbundlaminat kann im Prinzip zu beschreiben als Klebung von einzelnen Faserlagen, d.h. es fehlt keine Faserverstärkung im Fügebereich, es liegt maximal eine etwas dickere (einige µm) Harzschicht vor.

Die WO 2011/069899 A2 offenbart ein Fügeverfahren, bei dem ein Blech in der Verbindungszone integriert ist und vorstehende Abschnitte oder Verankerungspins greifen zu beiden Seiten in den benachbarten Kunststoff, um so eine Verzahnung zu erhalten, die die Verbindung der verklebten oder verschweißten Oberflächen verbessert.

Die US 2013/287481 A1 beschreibt ein Verfahren zum thermoplastischen Verschweißen von Faserverbundbauteilen, welche ein thermoplastisches Matrixmaterial aufweisen.

Hierbei wird ein von einer Heizspule umwickeltes Filmelement aus einem thermoplastischen Material zwischen den Faserverbundbauteilen angeordnet, die Heizspule wird durch Anschluss an eine Stromquelle erwärmt und durch Zusammenpressen der Teile werden die thermoplastischen Materialien miteinander verbunden. Die FR 2 742 691 A1 beschreibt ein ähnliches Verfahren, wobei spiralförmige Heizelemente zwischen zwei zu verbindenden thermoplastische Bauteilen angeordnet und erhizt werden.

Es ist die Aufgabe der Erfindung ein verbessertes Fügeverfahren von Kunststoffbauteilen bereitzustellen. Hierbei soll die Tragfähigkeit des Verbindungsbereichs erhöht werden und möglichst keine Schwächung der allgemeinen Materialfestigkeit darstellen.

Diese Aufgabe wird mit den Bauteil des Anspruchs 1 und dem entsprechenden Fügeverfahren gemäß Anspruch 6 gelöst. Vorteilhafte Ausführungsformen ergeben sich aus den abhängigen Ansprüchen.

Ein Bauteil weist erfindungsgemäß zumindest zwei Kunststoffkomponenten aus einem faserverstärkten Thermoplast auf, die in einer Verbindungszone miteinander verbunden sind. Das Bauteil weist ein Verstärkungselement auf, das eine Vielzahl die Verbindungszone überbrückender, spiralförmig mit einem konstanten Durchmesser und in identischen Windungen gebogener Drähte umfasst,. Hierdurch werden die Kunststoffkomponenten verankert. Zum einen werden Scherkräfte hierdurch gut aufgenommen und so werden die Kunststoffkomponenten sicher miteinander verbunden und es wird eine optionale Verklebung oder Verschweißung der Kunststoffkomponenten entlastet. Zudem dient die Verankerung auch zur Aufnahme von Schälkräften. Durch eine entsprechende Formgebung des Drahts ist es möglich, auf einen Träger, wie z.B. auf ein aus dem Stand der Technik bekanntes Blech zu verzichten, welches für die Positionierung und Ausrichtung der einzelnen Verstärkungselemente sorgt. Zudem kann, wie bei den bevorzugten Ausführungsformen gezeigt, das Verstärkungselement in der Verbindungszone eine Ausrichtung senkrecht zur Verbindungszone haben. Bereits ein nicht gebogener Draht erfüllt diese Anforderungen, wobei durch einen gebogenen Draht noch ein Hinterschnitt erzielt wird.

Die Windungen der Drähte sind senkrecht zu einer Längsachse der sich so ergebenden Spirale und zwischen den einzelnen Windungen sind Abwinklungen vorgesehen, deren Länge den Abstand zwischen den einzelnen Windungen definiert, wobei die Drähte nebeneinander angeordnet und so eine flächige Struktur gleichbleibender Dicke bilden.Die Drähte sind in die Kunststoffkomponenten eingebettet und die Kunststoffkomponenten weisen Fasern auf, die sich zwischen einzelnen Windungen oder Abschnitten des Verstärkungselements befinden.

Dabei besteht das Verstärkungselement aus dem Draht. Insbesondere umfasst es keinen weiteren Träger oder Halteelement, wie z.B. ein Blech an dem es oder mit dem es befestigt ist.

Der Draht ist in den Kunststoffkomponenten eingebettet. Eingebettet bedeutet insbesondere, dass der Draht nicht zerstörungsfrei entnommen werden kann. Und "zerstörungsfrei" bezieht sich bevorzugt auf die Zerstörungsfreiheit des Bauteils und insbesondere dessen Kunststoffkomponenten. Hierdurch wird eine spielfreie Verbindung geschaffen, die formschlüssig ist und so bestmöglich die Kräfte aufnehmen kann.

Insbesondere stehen die Verstärkungselemente an den Oberflächen der Kunststoffkomponenten, die der Verbindungszone gegenüber liegen, nicht über diese Kunststoffkomponenten vor und/oder sind an diesen Bauteilflächen sichtbar. Durch dieses Einbetten ist das Verstärkungselement von Umwelteinflüssen geschützt und eine mögliche Oberflächenbeschichtung kann homogen ausgebildet sein. Da das Verstärkungselement an beiden Bauteiloberflächen nicht sichtbar ist, ergibt sich, dass das Bauteil in dem nachfolgend beschriebenen Fügeverfahren hergestellt wurde. Bei bekannten Tufting- oder Stiching-Verfahren wird nämlich von zumindest einer Bauteiloberfläche ein Verstärkungselement eingeführt.

Vorzugsweise sind die Kunststoffkomponenten miteinander verschweißt und/oder in der Verbindungszone miteinander verschmolzen. Bereits eine hochwertige Verbindung kann über die Verstärkungselemente erzielt werden. Zusätzlich können die Kunststoffkomponenten miteinander stoffschlüssig verbunden sein, was die Festigkeit deutlich erhöht.

Alternativ können die Kunststoffkomponenten miteinander verklebt sein, was insbesondere bedeutet, dass eine zusätzliche Komponente aus einem gleichen oder anderen Stoff in die Verbindungszone eingebracht wird.

Der Draht umfasst eine Mehrzahl identischer Windungen und die einzelnen Windungen weisen in Bauteilquerrichtung eine gleichbleibende Dicke auf. Zudem ist eine Mehrzahl derartiger Drähte nebeneinander angeordnet und bildet so eine flächige Struktur gleichbleibender Dicke. Ein einzelner Draht kann gerade an dem Ende (oder den Enden) der Verbindungszone, bei denen mit Schälbelastungen zu rechnen ist, eingebracht werden und so gezielt diese Belastung aufnehmen. Wenn eine flächige Struktur eingebracht wird, so genügt es, diese einfach einzulegen. Auf eine besondere Ausrichtung muss ggf. nicht geachtet werden. Wenn die Windungen die gleichbleibende Dicke haben, so dringen sie identisch tief in das Material zu beiden Seiten ein, so dass sich eine reproduzierbare Festigkeit ergibt.

Der zumindest eine Draht ist spiralförmig mit einem konstanten Durchmesser gebogen. Somit ist der Querschnitt kreisförmig. Ferner sind dabei Abwinklungen vorgesehen. Der Radius der Abwinklungen ist bevorzugt ein scharfer Biegewinkel von z.B. 90°, oder zumindest kleiner als ein Fünftel des Radius der spiralförmigen Abschnitte konstanten Durchmessers. Auch andere Querschnitte der Verstärkungselemente, wie bspw. oval, quadratisch, quaderförmig, drei-, fünf-, oder sechseckig sind vorteilhaft. Gerade die kreisförmige Ausgestaltung wird bevorzugt, da sie einfach herzustellen ist und bei dem Einbringen in die Verbindungszone nicht auf eine winkelmäßige Ausrichtung geachtet werden muss.

Der zumindest eine Draht umfasst beabstandete Windungen, so dass sich eine längliche Struktur, insbesondere eine Spiralfeder, ergibt und die einzelnen Windungen stehen jeweils senkrecht zur Längserstreckung der länglichen Struktur. Dies ist gerade dann vorteilhaft, wenn zwei Kunststoffkomponenten verbunden werden sollen, die jeweils eine Faserverstärkung in identischer Ausrichtung aufweisen. Die einzelnen Windungen können dann entlang den einzelnen Verstärkungsfasern ausgerichtet sein. Hierdurch wird das Einbetten der Verstärkungselemente zwischen den Fasern deutlich erleichtert.

Erfindungsgemäß weisen beide Kunststoffelemente Fasern auf, die sich zwischen einzelnen Windungen oder Abschnitten des Verstärkungselements befinden. Die Betrachtungsrichtung ist dabei bevorzugt quer zur Bauteildickenrichtung. Durch dieses Einbetten der Verstärkungselemente zwischen den Fasern wird eine direkte Kraftübertragung von den Fasern auf die Verstärkungselemente unterstützt. Dabei sind insbesondere die Fasern gerichtete Fasern, die bevorzugt zur Erzielung der Erhöhung der Tragfähigkeit des Bauteils in einer oder mehrerer Richtungen dienen.

Bei einem erfindungsgemäßen Fügeverfahren zur Herstellung einer Verbindung zumindest zweier Kunststoffkomponenten aus einem faserverstärkten Thermoplast wird ein Verstärkungselement zwischen den zumindest zwei Kunststoffkomponenten angeordnet, welches eine Vielzahl spiralförmig mit einem konstanten Durchmesser und in identischen Windungen gebogener Drähte umfasst, wobei die Windungen senkrecht zu einer Längsachse der sich so ergebenden Spirale sind und zwischen den einzelnen Windungen Abwinklungen vorgesehen sind, deren Länge den Abstand zwischen den einzelnen Windungen definiert, und wobei die Drähte nebeneinander angeordnet und so eine flächige Struktur gleichbleibender Dicke bilden. Ferner werden die Kunststoffkomponenten über Zuführung von Energie, insbesondere induktiver Energie, elektrischer Energie oder Mikrowellenenergie, zu einer Erweichung und/oder einem Schmelzen gebracht, so dass sich Abschnitte des Verstärkungselements in das Material der Kunststoffkomponenten einbetten, Fasern der Kunststoffkomponenten zwischen einzelnen Windungen oder Abschnitten des Verstärkungselements angeordnet werden und sich eine stoffschlüssige Verbindung der Kunststoffkomponenten zueinander ergibt.

Bei dem Fügeverfahren kann vorteilhafter Weise das Verstärkungselement derart erwärmt werden, dass es Wärmeenergie an die umgebenden Kunststoffkomponenten abgibt. So ergibt sich eine mittelbare Erwärmung der Kunststoffkomponenten. Da das Verstärkungselement sich in der Fügezone befindet, wird gerade da das Kunststoffmaterial erweicht oder geschmolzen, wo es auf die Verbindung mit der jeweils anderen Kunststoffkomponente ankommt. Eine möglicherweise durch eine Erwärmung verursachte Schädigung von dem Kunststoffmaterial wird reduziert und/oder tritt im schlimmsten Fall nur lokal auf. Es kann auch elektrische Energie dadurch eingebracht werden, dass das drahtförmige Verstärkungselement mit Strom durchflossen wird und sich über seinen spezifischen Widerstand erhitzt. Bevorzugt wird die Energie induktiv und/oder über Mikrowellen und/oder über Infrarotstrahlung und/oder über Reibschweißen oder Ultraschallschweißen eingebracht. Es kann ferner der Stoffschluss über ein Schweißen und/oder ein Kleben mit einem zugesetzten Stoff erzielt oder unterstützt werden. Als stoffschlüssige Verbindungen werden Verbindungen bezeichnet, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Insbesondere können auch Klebeverfahren umfasst sein.

Darüber hinaus kann das zumindest eine Verstärkungselement zumindest einen Draht, eine Faser oder dergleichen umfassen, der eine Mehrzahl von Biegungen und/oder Abwinklungen aufweist, so dass sich eine dreidimensionale Struktur ergibt und insbesondere eine Mehrzahl dieser Verstärkungselemente nebeneinander angeordnet sind. Auch kann in der Verbindungszone ein faserverstärkter Kunststoff angeordnet sein, wobei insbesondere der dortige Faseranteil höher ist, als ein durchschnittlicher Faseranteil der Kunststoffkomponenten.

Zudem sind die zumindest zwei Kunststoffkomponenten über eine stoffschlüssige Verbindung miteinander verbunden. Hierzu kann eine Verschweißung und eine Verklebung zählen. Dadurch wird die Verbindung durch das Verstärkungselement unterstützt. Insbesondere können so Schälkräfte, die auf die Verbindung wirken, gut aufgenommen werden. Bevorzugt kann das zumindest eine Verstärkungselement in Bauteildickenrichtung innenliegend sein, so dass insbesondere an zumindest einer und insbesondere an beiden außenliegenden Oberflächen des Bauteils kein Verstärkungselemente vorhanden oder vorstehend ist. Die Verstärkungselemente sind insbesondere in Bauteilquerrichtung vollständig innenliegend. Hierdurch wird das Verstärkungselement vor Umgebungseinflüssen geschützt. In alternativen Ausführungsformen kann das Verstärkungselement bis zu der Bauteiloberfläche vorstehen. Dadurch ergibt sich eine optische Kontrollmöglichkeit, ob die Verbindung komplett gefügt ist.

Auch kann bei gewissen Ausführungsformen das Verstärkungselement einen Grundkörper, wie z.B. ein Blech, umfassen, der sich in der Verbindungszone der zumindest zwei Kunststoffkomponenten befindet und davon ausgehend eine Vielzahl von Dornen, Bolzen, Zungen oder Stegen angeordnet sein. In diesem Sinne dient der Grundkörper als Träger für die Biegungen, Dornen, Zungen oder Stege.

Bei einer weiteren Ausführungsform umfasst das zumindest eine Verstärkungselement eine Mehrzahl von Drähten, Fasern, Haken, Stiften oder dergleichen, die eine Mehrzahl von Biegungen und/oder Abwinklungen aufweisen, so dass sich eine dreidimensionale Struktur ergibt und insbesondere ist eine Mehrzahl dieser Verstärkungselemente nebeneinander angeordnet. Auf diese Weise kann auf einen vorstehend genannten blechartigen Grundkörper als Träger für die Dornen, Zungen oder dergleichen verzichtet werden, da aufgrund einer dreidimensionalen Geometrie des Verstärkungselements für die Ausrichtung der Abschnitte gesorgt wird, die in die zu verbindenden Kunststoffkomponenten eingebettet werden.

Vorteilhafterweise weist das Verstärkungselement und insbesondere dessen Windungen, Dornen, Zungen oder Stege in Richtung quer zur Bauteiloberfläche einen Hinterschnitt für das Material der Kunststoffkomponenten auf. Insbesondere sind die Windungen, Dornen, Zungen oder Stege über einen Formschluss in dem Material zumindest einer der Kunststoffkomponenten eingebettet. Hierdurch wird durch die Geometrie der Kunststoffkomponenten die Verbindung ermöglicht. Vor allem abhebende Kräfte, die auch als Schälkräfte bezeichnet werden, werden so von dem Verstärkungselement aufgenommen. Vorteilhaft ist ferner, wenn in der Verbindungszone ein faserverstärkter Kunststoff angeordnet ist. Insbesondere kann der dortige Faseranteil höher sein, als ein durchschnittlicher Faseranteil der Kunststoffkomponenten. Insbesondere werden hier Fasern kurzer Länge bis zur Länge von 5 mm betrachtet. Bei einer Verschweißung in der Verbindungszone kann auf diese Weise die Verbindungskraft erhöht werden. Ferner kann das Verstärkungselement einen metallischen Werkstoff aufweisen und/oder aus einem elektrisch leitenden Werkstoff gefertigt sein und/oder metallisch beschichtet sein. Hierdurch wird die Energieübertragung über Induktion, den elektrischen Widerstand oder Mikrowellen auf das Verstärkungselement ermöglicht, so dass eine lokale Materialerweichung ermöglicht wird und die Kunststoffkomponenten im Gesamten geringstmöglich thermisch belastet werden.

Im Folgenden werden bevorzugte Ausführungsbeispiele der Erfindung anhand von schematischen Darstellungen näher erläutert. Es zeigen:
- Fig. 1: eine perspektivische Ansicht von zwei Kunststoffkomponenten, die zu einem Bauteil verbunden sind,
- Fig. 2: eine seitliche Ansicht auf das in Fig. 1 gezeigte Bauteil,
- Fig. 3: eine seitliche Ansicht eines spiralförmigen Verstärkungselements,
- Fig. 4: eine mattenartige Struktur mit einer Vielzahl spiralförmiger Verstärkungselemente,
- Fig. 5: einen Schnitt durch zwei verbundene Kunststoffkomponenten, wobei eine Matte gemäß Fig. 4 zum Einsatz kommt und die Ansicht A gemäß Fig. 4 gezeigt ist,
- Fig. 6: eine einzelne Windung einer alternativen Ausführungsform des Verstärkungselements,
- Fig. 7: eine Mehrzahl der in Fig. 6 gezeigten Verstärkungselemente in einer mattenförmigen Anordnung und
- Fig. 8: einen seitlichen Schnitt durch ein Bauteil mit den Verstärkungselementen gemäß Fig. 6 oder Fig. 7.

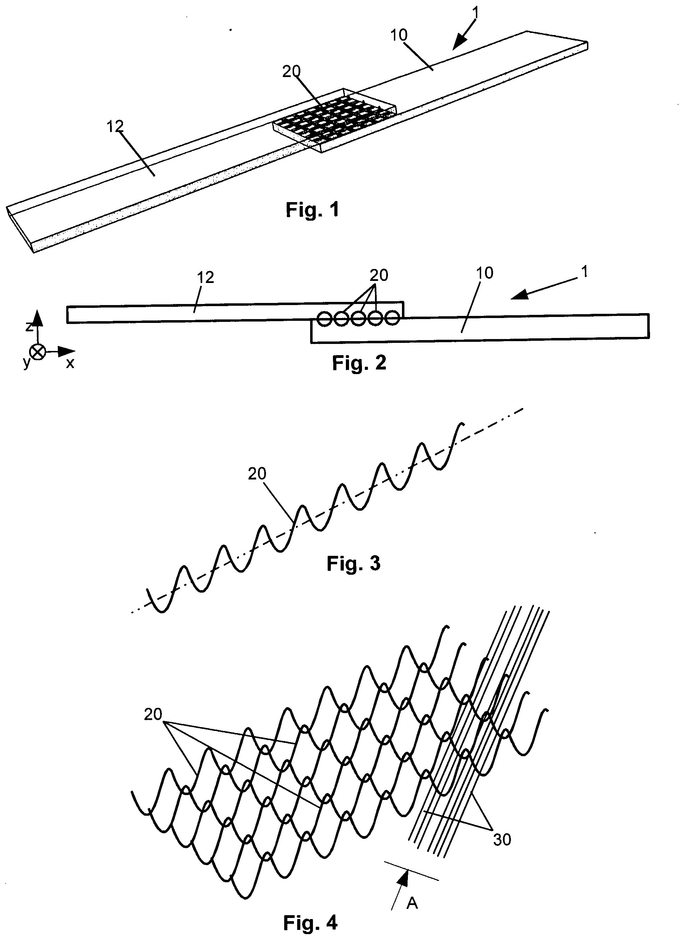

Fig. 1 zeigt zwei Kunststoffkomponenten 10 und 12 eines Bauteils 1. Das Bauteil 1 kann ein in der Luftfahrt eingesetztes Bauteil sein. So kann dies insbesondere eine Klappe, wie eine Landeklappe, eines Flugzeugs sein. Die Bauteile bestehen in der bevorzugten Ausführungsform aus einem Thermoplast und sind faserverstärkt. Die Faserverstärkung kann unterschiedlich ausgeführt sein. Bei einer ersten Variante sind die Fasern lang und gerichtet, so dass für die Fasern konstruktiv eine bestimmte Ausrichtung bestimmt ist, die insbesondere der Hauptbelastungsrichtung entspricht. Bei einer zweiten Variante ist eine Vielzahl kurzer Fasern in dem Harz ungeordnet verteilt, so dass die allgemeine Belastungsfestigkeit des Bauteils gesteigert ist, ohne dass innerhalb des Materials eine bevorzugte Faserausrichtung vorgegeben ist. Auch Kombinationen dieser Faserausrichtungen sind möglich.

Fig. 2 zeigt einen seitlichen Schnitt durch das Bauteil 1 gemäß Fig. 1. Es sind mehrere Verstärkungselemente 20 sichtbar, die spiralförmig sind, so dass sich im Schnitt jeweils der gezeigte Kreisquerschnitt ergibt.

Die in den Kunststoffkomponenten 10 und 12 enthaltenen Fasern sind hier nicht gezeigt. In einer bevorzugten Ausführungsform ist jeweils in den Kunststoffkomponenten 10 und 12 eine Anzahl von Glas- oder Kohlefasern in der x-Richtung ausgerichtet. Die Aufgabe dieser Fasern ist es die Zugfestigkeit des Bauteils 1 in der x-Richtung zu erhöhen. Wenn kein Verstärkungselement 20 in der Verbindungszone integriert wäre, so müsste die Verklebung in der Verbindungszone die Zugkräfte komplett aufnehmen und von der einen in die andere Kunststoffkomponente ableiten. Da in der Verbindungszone keine Fasern oder eine nicht ausreichende Faseranzahl enthalten sein kann, ist die Verbindungsfestigkeit der Verbindungszone kleiner als die (Zug-)Festigkeit des Gesamtmaterials.

Um die Verbindungsfestigkeit zu erhöhen, kommt das Verstärkungselement 20 zum Einsatz, wie es in Fig. 3 und 4 beispielhaft gezeigt ist. In Fig. 3 ist ein spiralförmiger Draht gezeigt. Fünf dieser Drähte sind bei der Ausführungsform gemäß Fig. 2 parallel zueinander in der Verbindungszone integriert.

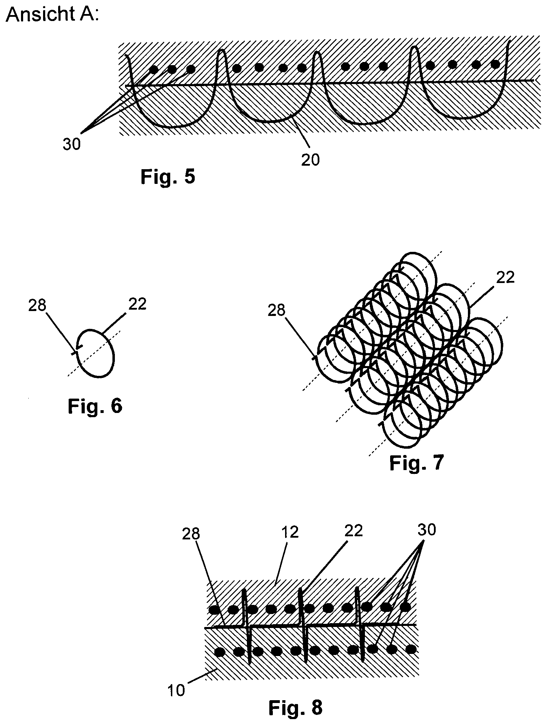

Fig. 4 zeigt ein Verstärkungselement 20, welches aus einer Vielzahl verbundener spiralförmiger in Fig. 3 gezeigter Drähte gebildet ist. Diese Drähte können mattenartig miteinander verwebt sein. Auch können einzelne spiralförmige Elemente miteinander verlötet oder verschweißt sein, um eine flächige und dreidimensionale Struktur zu schaffen. Zudem sind beispielhaft ein paar eingebettete Fasern 30 gezeigt. Fig. 5 stellt einen Schnitt A in einem schrägen Winkel durch diese Struktur dar, wobei das umgebende Harz nicht gezeigt ist. In dem Schnitt sind die Windungen des Verstärkungselements in einem sehr flachen Winkel geschnitten, so dass sich ein in z-Richtung (siehe Fig. 2) freier Abschnitt ergibt. Durch die gezeigte Ausrichtung der gebogenen Drähte ist es möglich, dass ihre Windungen des Verstärkungselements 20 bei dem Fügen zwischen den Fasern 30 in das Material eindringen können, ohne die Fasern 30 sonderlich zu verschieben.

Eine alternative Ausführungsform der Verstärkungselemente ist in den Fig. 6 bis 8 gezeigt. Dort ist ein Verstärkungselement 22 aus Draht spiralförmig gebogen, so dass die einzelnen Windungen jeweils den gleichen Durchmesser aufweisen. Die einzelnen Windungen sind senkrecht zur der Längsachse der sich so ergebenden Spirale. Zwischen den einzelnen Windungen sind Abwinklungen 28 vorgegeben, deren Länge den Abstand zwischen den einzelnen Windungen definiert. Während in Fig. 6 eine einzelne Windung gezeigt ist, ist in Fig. 7 eine flächige Struktur einer Vielzahl von Windungen gezeigt, wobei die einzelnen sich so ergebenden Spiralen miteinander verbunden sind. Alternativ können die einzelnen Spiralen auch einzeln in die Verbindungszone eingebracht werden. Die Abwinklungen sind, wie in Fig. 8 gezeigt, bevorzugt exakt in der Kontakt-, bzw. Verbindungszone der beiden Kunststoffkomponenten 10,12 und die Windungen sind in deren Kunststoffmaterial eingebettet. Die Biegung dieser Ausführungsform kann mit einer Spiralbindung verglichen werden, wie sie bei dem Binden von Blättern zum Einsatz kommt.

Als Material für die Kunststoffkomponenten 10, 12 kommt als Matrixmaterial bspw. ein thermoplastischer Kunststoff zum Einsatz. Bevorzugt kann ein PEEK verwendet werden. Bei dem Verfahren des Fügens der Kunststoffkomponenten 10,12, wird zunächst das Verstärkungselement 20,22 zwischen die Kunststoffkomponenten 10 und 12 gebracht. Danach kann das Verstärkungselement 20 auf die Erweichungstemperatur des thermoplastischen Kunststoffs der Komponenten 10,12 gebracht werden. Über einen Andruck in z-Richtung dringen die Windungen des Verstärkungselements in die Kunststoffkomponenten 10,12. Zur Ermöglichung oder zur Unterstützung des Eindringens der Windungen kann eine Induktionswärmequelle verwendet werden. Dafür ist das Verstärkungselement 20 bevorzugt aus einem geeigneten (metallischen) Material. Infrage kommt hier insbesondere ein Stahl oder Titan. Auch soll das Verstärkungselement eine ausreichende Festigkeit aufweisen, so dass es u.a. über Zugkräfte die Verbindung der Kunststoffkomponenten unterstützen kann. Da auf diese Weise lokal und selektiv das Verstärkungselement erwärmt werden kann, werden die Kunststoffkomponenten 10,12 geringstmöglich thermisch belastet. Auch über sonstige Wärmequellen wie z.B. Infrarot oder Laser kann der Kunststoff erweicht werden.

Die Steifigkeit des Verstärkungselements, also insbesondere des gebogenen Drahts, ist derart hoch, dass es bei dem Fügen ausschließlich oder fast ausschließlich zu einer elastischen Verformung kommt. Wenn das Verstärkungselement kreisförmig gebogen zum Einsatz kam, so ist diese Kreisform also noch bei dem fertig verbundenen Bauteil vorhanden. Bei dem Fügevorgang findet also praktisch keine Verformung des Verstärkungselements statt.

Alternativ kann zur z.B. induktiven Erwärmung an die Enden der Drähte der Verbindungselemente ein elektrischer Strom angelegt werden, so dass über eine ohmsche Erwärmung das Kunststoffmaterial zum Erwärmen, Erweichen und ggf. zum Schmelzen gebracht wird.

Bei einer alternativen Ausgestaltung des Fügevorgangs werden beide zu verbindenden Kunststoffkomponenten überlappend zueinander angeordnet. Dann wird der Kunststoff erwärmt, um seine Festigkeit zu reduzieren. Nachfolgend wird von einer Außenseite ein spiralförmiges Verstärkungselement in den Kunststoff gedreht. Auf diese Weise ist es möglich, eine Art Verwebung von den Verstärkungselement und den in dem Kunststoff eingebetteten Fasern zu erzielen. Bevorzugt wird das Verstärkungselement in einem spitzen Winkel von z.B. 30° +/-15° zur Bauteiloberfläche eingeschraubt, um so eine "Verwebung" über eine Vielzahl der Windungen des Verstärkungselements zu erzielen.

Für das Bewirken der Verbindung wird eine Kraft in z-Richtung auf die Kunststoffkomponenten 10,12 aufgebracht. Dadurch werden die Windungen der Verstärkungselemente in den Kunststoff eingedrückt, bzw. das Kunststoffmaterial fließt um die Windungen. Wenn die Kunststoffkomponenten 10,12 sich berühren, ist der Fügevorgang beendet. Aufgrund des Fließens des Kunststoffs um die Windungen wird die ehemals ebene Oberfläche der Kunststoffkomponenten 10,12 aufgebrochen. Dadurch wird eine Oberflächenvergrößerung bewirkt, die die Verbindung der Kunststoffkomponenten 10,12 unterstützt. Durch die beschriebene Verbindung werden die Windungen der Verstärkungselemente in den Kunststoff eingebettet. Es ergibt eine formschlüssige Verbindung zwischen den Windungen des Kunststoffmaterials und dem jeweiligen Verstärkungselement, welches in beiden Kunststoffkomponenten eingebettet ist. Da die Tragfähigkeit des Verstärkungselements, dass z.B. aus Edelstahl gefertigt ist, deutlich höher ist als die der Kunststoffkomponenten wird die Verbindungsfestigkeit entsprechend erhöht.

Zu typischen Belastungen der Verbindung zählen Scherkräfte, also Zug- oder Druckkräfte in x-Richtung gemäß Fig. 2 oder Schälkräfte, die senkrecht dazu sind. Gerade die Belastungsfähigkeit in Bezug auf Schälkräfte wird durch die beschriebene Verbindung deutlich erhöht.

Zwischen die beiden Kunststoffkomponenten 10,12 kann zudem eine Füllsubstanz eingebracht werden, die bevorzugt ein thermoplastischer Kunststoff mit einem hohen Faseranteil ist. Wenn mit einem Reibrührverfahren das Material aufgeschmolzen wird, so kann über die Füllsubstanz eine verbesserte Verschweißung der Kunststoffkomponenten erzielt werden.

Wenn die Dicke der Kunststoffkomponenten bspw. 10 mm beträgt, so können Windungen des Durchmessers von bspw. 6-8 mm zum Einsatz kommen, so dass die Windungen sich ca. 3 - 4 mm in das Material eindrücken. Verallgemeinert liegt bevorzugt die Einbetttief der Windungen des Drahts zwischen 0,2 und 0,7 der Dicke der jeweiligen Kunststoffkomponente.

### Bezugszeichen:

- 1: Bauteil
- 10, 12: Kunststoffkomponenten
- 20,22: Verstärkungselement
- 28: Abwinklung
- 30: Fasern

## Patentansprüche

1. Bauteil (1), aufweisend:
zumindest zwei Kunststoffkomponenten (10, 12) aus einem faserverstärkten Thermoplast, die in einer Verbindungszone miteinander verbunden sind; und
ein Verstärkungselement, welches eine Vielzahl die Verbindungszone überbrückender, spiralförmig mit einem konstanten Durchmesser und in identischen Windungen gebogener Drähte (20,22) umfasst, wobei die Windungen senkrecht zu einer Längsachse der sich so ergebenden Spirale sind und zwischen den einzelnen Windungen Abwinklungen (28) vorgesehen sind, deren Länge den Abstand zwischen den einzelnen Windungen definiert, wobei die Drähte (20,22) nebeneinander angeordnet und so eine flächige Struktur gleichbleibender Dicke bilden;
wobei die Drähte (20; 22) in die Kunststoffkomponenten (10; 12) eingebettet sind und die Kunststoffkomponenten (10; 12) Fasern (30) aufweisen, die sich zwischen einzelnen Windungen oder Abschnitten des Verstärkungselements (10,12) befinden.

2. Bauteil (1) gemäß Anspruch 1, **dadurch gekennzeichnet, dass** das Verbindungselement (20,22) an den Oberflächen der Kunststoffkomponenten (10,12), die der Verbindungszone gegenüber liegen, nicht über diese Kunststoffkomponenten (10,12) vorsteht und/oder an diesen Bauteilflächen sichtbar ist.

3. Bauteil (1) gemäß Anspruch 1 oder 2, **dadurch gekennzeichnet, dass** die Kunststoffkomponenten (10,12) miteinander verschweißt und/oder in der Verbindungszone miteinander verschmolzen sind.

4. Bauteil (1) gemäß Anspruch 1 oder 2, **dadurch gekennzeichnet, dass** die Kunststoffkomponenten (10,12) miteinander verklebt sind.

5. Bauteil (1) gemäß einem der voranstehenden Ansprüche, **dadurch gekennzeichnet, dass** die Fasern (30) gerichtete Fasern sind, die zur Erzielung der Erhöhung der Tragfähigkeit des Bauteils in einer oder mehrerer Richtungen dienen.

6. Fügeverfahren zur Herstellung einer Verbindung zumindest zweier Kunststoffkomponenten (10, 12) aus einem faserverstärkten Thermoplast, wobei das Verfahren umfasst:
Anordnen Verstärkungselements (20) zwischen den zumindest zwei Kunststoffkomponenten (10, 12) angeordnet, welches eine Vielzahl spiralförmig mit einem konstanten Durchmesser und in identischen Windungen gebogener Drähte (20,22) umfasst, wobei die Windungen senkrecht zu einer Längsachse der sich so ergebenden Spirale sind und zwischen den einzelnen Windungen Abwinklungen (28) vorgesehen sind, deren Länge den Abstand zwischen den einzelnen Windungen definiert, und wobei die Drähte (20,22) nebeneinander angeordnet und so eine flächige Struktur gleichbleibender Dicke bilden; und
Erweichen und/oder Schmelzen der Kunststoffkomponenten (10,12) über Zuführung von Energie, so dass sich Abschnitte des Verstärkungselements (22) in das Material der Kunststoffkomponenten einbetten, Fasern (30) der Kunststoffkomponenten (10, 12) zwischen einzelnen Windungen oder Abschnitten des Verstärkungselements angeordnet werden und sich eine stoffschlüssige Verbindung der Kunststoffkomponenten (10, 12) zueinander ergibt.

7. Fügeverfahren gemäß Anspruch 6, wobei das Verstärkungselement (20,22) derart erwärmt wird, dass es Wärmeenergie an die umgebenden Kunststoffkomponenten (10,12) abgibt.

8. Fügeverfahren gemäß Anspruch 6 oder 7, wobei die Steifigkeit des Verstärkungselements derart hoch ist, dass es bei dem Fügen ausschließlich oder fast ausschließlich zu einer elastischen Verformung kommt.

9. Fügeverfahren gemäß einem der Ansprüche 6 bis 8, wobei das Verstärkungselement aus Stahl oder Titan ist.

## Claims

1. Component (1) having:
at least two synthetic components (10, 12) made of a fibre-reinforced thermoplastic, which are connected to one another in a connection zone; and
a reinforcing element, which comprises a multiplicity of wires (20, 22) that bridge the connection zone and are bent into identical coils to form a spiral of constant diameter, wherein the coils are provided perpendicular to a longitudinal axis of the resulting spiral and angled portions (28) are provided between the individual coils, the length of which defines the spacing between the individual coils, wherein the wires (20, 22) are arranged next to one another and thus form an areal structure of constant thickness;
wherein the wires (20; 22) are embedded into the synthetic components (10; 12) and the synthetic components (10; 12) have fibres (30) located between individual coils or sections of the reinforcing element (10, 12).

2. Component (1) according to Claim 1, **characterized in that** the connecting element (20, 22), on the surfaces of the synthetic components (10, 12) facing the connecting zone, does not project beyond these synthetic components (10, 12) and/or is not visible on these component faces.

3. Component (1) according to Claim 1 or 2, **characterized in that** the synthetic components (10, 12) are welded together and/or are melted together in the connecting zone

4. Component (1) according to Claim 1 or 2, **characterized in that** the synthetic components (10, 12) are adhesively bonded together.

5. Component (1) according to one of the preceding claims, **characterized in that** the fibres (30) are oriented fibres which serve to increase the load-bearing capacity of the component in one or more directions.

6. Joining method for establishing a connection between at least two synthetic components (10, 12) made of a fibre-reinforced thermoplastic, wherein the method comprises:
arranging a reinforcing element (20) between the at least two synthetic components (10, 12), which comprises a multiplicity of wires (20, 22) that are bent into identical coils to form a spiral of constant diameter, wherein the coils are provided perpendicular to a longitudinal axis of the resulting spiral and angled portions (28) are provided between the individual coils, the length of which defines the spacing between the individual coils, wherein the wires (20, 22) are arranged next to one another and thus form an areal structure of constant thickness; and
softening and/or melting the synthetic components (10, 12) by supplying energy so that portions of the reinforcing element (22) become embedded in the material of the synthetic components, fibres (30) of the synthetic components (10, 12) become arranged between individual coils or portions of the reinforcing element and there results an integrally-bonded connection between the synthetic components (10, 12).

7. Joining method according to Claim 6, wherein the reinforcing element (20, 22) is heated such that it gives off thermal energy to the surrounding synthetic components (10, 12).

8. Joining method according to Claim 6 or 7, wherein the stiffness of the reinforcing element is such that, during joining, it deforms exclusively or almost exclusively elastically.

9. Joining method according to one of Claims 6 to 8, wherein the reinforcing element is made of steel or titanium.

## Revendications

1. Élément (1), comprenant :
au moins deux composants en matière plastique (10, 12) en un thermoplastique renforcé par des fibres, qui sont reliés les uns avec les autres dans une zone de liaison ; et un élément renforçant, qui comprend une pluralité de fils (20, 22) pontant la zone de liaison, courbés en spirale avec un diamètre constant et en des enroulements identiques, les enroulements étant perpendiculaires à un axe longitudinal de la spirale ainsi formée, et des coudes (28) étant prévus entre les enroulements individuels, dont la longueur définit l'écart entre les enroulements individuels, les fils (20, 22) étant agencés les uns à côté des autres, et formant ainsi une structure plate d'épaisseur constante ;
les fils (20 ; 22) étant incorporés dans les composants en matière plastique (10 ; 12), et les composants en matière plastique (10 ; 12) comprenant des fibres (30), qui se trouvent entre des enroulements individuels ou des sections de l'élément renforçant (10, 12).

2. Élément (1) selon la revendication 1, **caractérisé en ce que** l'élément de liaison (20, 22) sur les surfaces des composants en matière plastique (10, 12), qui sont opposées à la zone de liaison, ne dépasse pas de ces composants en matière plastique (10, 12) et/ou est visible sur ces surfaces de l'élément.

3. Élément (1) selon la revendication 1 ou 2, **caractérisé en ce que** les composants en matière plastique (10, 12) sont soudés les uns avec les autres et/ou sont fondus les uns avec les autres dans la zone de liaison.

4. Élément (1) selon la revendication 1 ou 2, **caractérisé en ce que** les composants en matière plastique (10, 12) sont collés les uns avec les autres.

5. Élément (1) selon l'une quelconque des revendications précédentes, **caractérisé en ce que** les fibres (30) sont des fibres orientées, qui permettent d'obtenir une augmentation de la capacité de charge de l'élément dans une ou plusieurs directions.

6. Procédé d'assemblage pour la réalisation d'une liaison entre au moins deux composants en matière plastique (10, 12) en un thermoplastique renforcé par des fibres, le procédé comprenant :
l'agencement d'un élément renforçant (20) entre lesdits au moins deux composants en matière plastique (10, 12), qui comprend une pluralité de fils (20, 22) courbés en spirale avec un diamètre constant et en des enroulements identiques, les enroulements étant perpendiculaires à un axe longitudinal de la spirale ainsi formée, et des coudes (28) étant prévus entre les enroulements individuels, dont la longueur définit l'écart entre les enroulements individuels, et les fils (20, 22) étant agencés les uns à côté des autres, et formant ainsi une structure plate d'épaisseur constante ; et
le ramollissement et/ou la fusion des composants en matière plastique (10, 12) par apport d'énergie, de telle sorte que des sections de l'élément renforçant (22) s'incorporent dans le matériau des composants en matière plastique, des fibres (30) des composants en matière plastique (10, 12) étant agencées entre des enroulements individuels ou des sections de l'élément renforçant, et une liaison par accouplement de matière des composants en matière plastique (10, 12) les uns avec les autres étant obtenue.

7. Procédé d'assemblage selon la revendication 6, dans lequel l'élément renforçant (20, 22) est chauffé de telle sorte qu'il émette de l'énergie thermique vers les composants en matière plastique (10, 12) qui l'entourent.

8. Procédé d'assemblage selon la revendication 6 ou 7, dans lequel la rigidité de l'élément renforçant est si élevée qu'une déformation élastique se produit exclusivement ou presque exclusivement lors de l'assemblage.

9. Procédé d'assemblage selon l'une quelconque des revendications 6 à 8, dans lequel l'élément renforçant est en acier ou en titane.
